## Europäisches Patentamt
## European Patent Office
## Office européen des brevets

(11) Veröffentlichungsnummer: **0 185 178**
B1

(12) **EUROPÄISCHE PATENTSCHRIFT**

(45) Veröffentlichungstag der Patentschrift:
18.10.89

(21) Anmeldenummer: 85113823.0

(22) Anmeldetag: 30.10.85

(51) Int. Cl.⁴: **C 03 B 5/027**, C 03 B 5/16, C 03 B 5/42

(54) Elektrisch betriebener diskontinuierlicher Glasschmelzofen.

(30) Priorität: 14.12.84 DE 3445557

(43) Veröffentlichungstag der Anmeldung:
25.06.86 Patentblatt 86/26

(45) Bekanntmachung des Hinweises auf die Patenterteilung:
18.10.89 Patentblatt 89/42

(84) Benannte Vertragsstaaten:
AT BE CH DE FR GB IT LI NL SE

(56) Entgegenhaltungen:
DE-B- 2 431 055
FR-A- 914 266
US-A- 3 983 309

(73) Patentinhaber: Sorg GmbH & Co. KG, Im Aller 23 Postfach 520, D-8770 Lohr/Main (DE)

(72) Erfinder: Pieper, Helmut, Buchenstrasse 19, D-8770 Lohr/Main (DE)

(74) Vertreter: Patentanwälte Schulze Horn und Hoffmeister, Goldstrasse 36, D-4400 Münster (DE)

ACTORUM AG

## Beschreibung

Die Erfindung betrifft einen elektrisch betriebenen diskontinuierlichen Glasschmelzofen mit wenigstens einem durch eine Anordnung von stromgespeisten Elektroden beheizten, feuerfest ausgekleideten Bassin und einem darüber angeordneten, elektrische Heizelemente aufweisenden Oberofen.

Diskontinuierliche Glasschmelzöfen dienen dazu, in einem festen Rhythmus, z.B. einem 24h-Rhythmus, in Glashäfen oder Bassins eingebrachte Gemengemengen aufzuschmelzen, die Schmelze zu läutern und in der für die Verarbeitung benötigten Temperatur und Qualität vorzuhalten. Derartige Öfen werden sowohl mit Gas oder Öl als auch elektrisch beheizt. Auf dem Gebiet der elektrischen Beheizung sind zwei grundsätzliche Ofentypen bekannt: Solche mit rein indirekter Beheizung durch Heizelemente im Oberofen und solche mit einer Kombination von indirekter Beheizung durch Heizelemente und direkter Beheizung durch im Glashafen oder Bassin angebrachte Elektroden.

Beide letztgenannten Ofentypen weisen eine Reihe von Nachteilen auf. Bei einer rein indirekten Beheizung muss die gesamte erforderliche Wärmeenergie von aussen zugeführt werden. Dies bedingt besonders in den Phasen des Einschmelzens des Gemenges und Läutern des Glases sehr hohe Temperaturen im Oberofen von bis zu etwa 1500 °C.

Derartige Temperaturen zu erzeugen stellt eine starke Belastung für den Oberofen und die dort installierten Heizelemente dar, was zu raschem und vorzeitigem Verschleiss des Oberofens führt. Die hohen, von aussen auf das Gemenge einwirkende Temperaturen führen besonders bei Gemengen für blei-, fluor-, borhaltige oder ähnliche Gläser zu hohen Verdampfungsraten und so zu unerwünschten Emissionen, die entweder gesondert abzufiltern sind oder aber sogar die Umwelt belasten. Als letzter Nachteil sei genannt, dass der Stromverbrauch bei indirekter Beheizung sehr hoch ist, weil nur ein Teil der erzeugten Wärmeenergie in das Bassin gelangt und ein wesentlicher Teil als Abwärme verloren geht.

Öfen mit kombinierter Beheizung durch Heizelemente im Oberofen und mit stromgespeisten Elektroden im Bassin vermeiden zwar die oben geschilderten Probleme, zeigen aber dafür andere Nachteile. Zwei Punkte sind besonders zu erwähnen: Im Bassin kommt es an den Durchtrittsstellen der Elektroden bzw. deren Halterungen durch die Wandungen des Bassins zur Abkühlung der umgebenden Schmelze infolge der Wasserkühlung der Elektrodenhalter. Die Schmelze wird dadurch inhomogen und in ihrer Qualität beeinträchtigt. Auch die Auskleidung des Bassins unterliegt hierbei hohen Wechselbeanspruchungen mit der Folge verkürzter Standzeit. Zu einer weiteren Qualitätsminderung der Schmelze kommt es durch Reaktion der Elektroden mit der Glasschmelze mit der Folge von Gasblasenbildung auch während der Entnahmeperiode.

Aus der US-A-3 983 309 ist weiterhin bereits ein elektrisch betriebener Glasschmelzofen bekannt, bei dem fest installierte Tauchelektroden vorhanden sind, deren elektrischen Zuleitungen durch die auf der Schmelze befindliche Gemengeschicht hindurch führen. Dieser Ofen ist aber nur kontinuierlich betreibbar, da nur das geschmolzene Glas eine ausreichende Leitfähigkeit aufweist, um die Elektroden wirksam sein zu lassen.

Es stellt sich daher die Aufgabe, einen Glasschmelzofen der eingangs genannten Art zu schaffen, der die aufgeführten Nachteile vermeidet und insbesondere einen niedrigen Energieverbrauch hat, eine längere Standzeit der Heizelemente des Oberofens gewährleistet, schädliche Emissionen vermeidet und eine Glasschmelze von hoher Qualität, d.h. ohne Glasblasen und ohne Inhomogenitäten liefert.

Die Lösung der Aufgabe wird erfindungsgemäss erreicht durch einen Glasschmelzofen der eingangs genannten Art, bei dem die Elektroden Tauchelektroden sind und mit ihren aus dem Ofen herausgeführten metallischen Zuleitungen um eine etwa in Höhe der Hälfte des gefüllten Teils des Bassins ausserhlb des Ofens liegende Drehachse in einer etwa vertikalen Ebene von einer Arbeitsstellung im Ofen in eine Lge ausserhalb des Ofens verschwenkbar angelenkt sind.

Hierdurch wird vorteilhaft erreicht, dass die Elektroden je nach Wärmeenergie-Bedarf in den Ofen eingefahren oder ganz aus dem Ofen herausgeschwenkt werden können. In Phasen hohen Wärmeenergie-Bedarfs, wie Aufschmelzen von Gemenge oder Erzeugung einer hohen Temperatur der Schmelze für die Läuterung, sind die Elektroden in den Ofen eingefahren und werden mit Strom gespeist. Während dieser Zeit kann die Temperatur im Oberofen stark reduziert werden, was dessen Haltbarkeit sehr zugute kommt. Durch die Umkehrung des Temperaturgradienten im Bassin, höchste Temperatur an der Unterseite des aufgebrachten Gemenges, werden Emissionen stark verringert. Aufsteigende, verdampfende Substanzen kondensieren zum grossen Teil in der nach oben kühler werdenden Gemengedecke und gelangen so nicht in die Umwelt. Nach dem Aufschmelzen von Gemenge bis zum maximalen Füllstand des Bassins mit Glasschmelze und der Einstellung einer für die Läuterung günstigen hohen Temperatur der Schmelze wird die Elektroden-Zuleitungs-Anordnung aus dem Ofen herausgeschwenkt und die Heizleistung der Heizelemente des Oberofens wird so eingestellt, dass nach der Läuterungszeit die Schmelze eine für die Ausarbeitung optimale, geringere Temperatur hat. Durch das Entfernen der Elektroden aus der Glasschmelze während der Ausarbeitung werden sowohl Inhomogenitäten als auch Gasblasen in der Schmelze vermieden, d.h. es werden optimale Bedingungen mit dem Resultat einer qualitativ sehr hochwertigen Glasschmelze erreicht. Auch die Auskleidung des Bassins zeigt durch den Fortfall der Elektrodenduchführungen eine wesentlich bessere Haltbarkeit. Kontrolle und Austausch von Elektroden sind wesentlich vereinfacht, da diese regelmässig aus dem Ofen herausgefahren werden.

Zweckmässig weist der Glasschmelzofen verschliessbare Öffnungen für die Hindurchführung der Elektroden-Zuleitungs-Anordnung auf, welche ein problemloses Verschwenken erlauben und bei aus dem Ofen verschwenkter Lage der Elektroden das Entweichen der vom Oberofen erzeugten Wärme aus dem Ofen verhindern.

Die Auskleidung des Bassins ist vorteilhaft zweiteilig ausgeführt mit einem Auskleidungteil mit einer grösseren Wandstärke im unteren Bereich und einem Teil mit geringerer Wandstärke im oberen Bereich. Der Auskleidungsteil im unteren Bereich des Bassins, der dauernd mit Schmelze gefüllt ist, hat eine hohe Wärmespeicherkapazität und sorgt dafür, dass Temperaturschwankungen vermindert werden. Der obere Teil der Auskleidung des Schmelzhafens kommt nur periodisch mit Schmelze in Berührung und ist deshalb sehr starken Beanspruchungen durch Temperaturwechsel unterworfen. Deshalb ist hier ein Material mit guter Temperaturwechselbeständigkeit eingesetzt.

Zur Vermeidung von Oberflächenfehlern bei der Entnahme von Teilen der Glasschmelze aus dem Bassin weist dieses in einer Ausgestaltung der Erfindung einen absperrbaren seitlichen Auslauf, vorzugsweise aus Platin, auf, der glasseitig etwa im Bereich des Übergangs von der Auskleidung mit der grösseren zu dem Teil mit der geringeren Wandstärke liegt. Die Schmelze wird so aus einem sowohl oberflächen- als auch bodenfernen Bereich des Bassins entnommen, wodurch eine Steigerung der Glasqualität erreicht wird. Auch kann so der Glasschmelzspiegel im Bassin nicht über die erforderliche Restmenge an Schmelze hinaus abgesenkt werden.

Da sich im unteren Bereich des Bassins ständig qualitativ minderwertiges Bodenglas absetzt, weist das Bassin sinnvoll in Höhe seines Bodens oder im Boden selbst eine Drainageöffnung auf, durch die das Bodenglas von Zeit zu Zeit abgezogen werden kann, ohne dass der laufende Betrieb des Ofens unterbrochen werden muss.

Für eine einfache Durchführung der Schwenkbewegung der Elektroden-Zuleitungs-Anordnung ist es besonders zweckmässig, die Zuleitungen der Elektroden starr und etwa kreisabschnittsförmig um einen in der Drehachse der Schwenkbewegung liegenden Kreismittelpunkt gebogen auszuführen. Zum einen wird hierdurch erreicht, dass die Öffnung im Ofen für die Hindurchführung der Anordnung möglichst klein gehalten werden kann, und zum anderen erfolgt die Bewegung der Elektroden im Bassin mit etwa nach oben wegführenden Zuleitungen und in einer angenähert vertikalen Richtung.

Um zu gewährleisten, dass die Elektroden immer gleich tief eingetaucht sind, ist der erfindungsgemässe Ofen sinnvollerweise mit einer selbsttätigen Nachführeinrichtung zur Konstanthaltung der Eintauchtiefe der Elektroden ausgestattet. Beispielweise lässt sich dies durch einen über einen die Höhe des Glasschmelzespiegels abtastenden Fühler gesteuerten Stellmotor, der eine entsprechende Verschwenkung der Elektroden-Zuleitungs-Anordnung vornimmt, realisieren.

In Glasschmelzöfen kommen üblicherweise zylindrische Elektroden zum Einsatz, was zu einer grossen Oberflächenbelastung bei grossen Strömen und damit verstärkter Abnutzung führt. Um diesem Nachteil abzuhelfen, kann der Ofen nach der Erfindung Elektroden aufweisen, die die Form einer Platte und so eine wesentlich grössere Oberfläche bei gleichem Volumen haben. Dadurch verringert sich die spezifische Flächenbelastung mit dem Resultat einer verbesserten Haltbarkeit der Elektroden.

Schliesslich kann der Ofen in seinem Innenraum wenigstens einen vertikal verfahrbaren Rührer aufweisen, der wegen der geringeren im Oberofen erforderlichen Temperaturen auch während des Betriebes des Ofens dort verbleiben kann und zur Homogenisierung der Glasschmelze im Bassin dient. Wird er nicht eingesetzt, lässt er sich aus der Schmelze heraus in den Oberofen verfahren.

Im folgenden wird ein Ausführungsbeispiel der Erfindung anhand einer Zeichnung näher beschrieben. Es zeigen im einzelnen:

Figur 1 einen Glasschmelzofen nach der Erfindung im Vertikalschnitt und

Figur 2 den Ofen im Vertikalschnitt in einer Ebene senkrecht zum Schnitt in Fig.1.

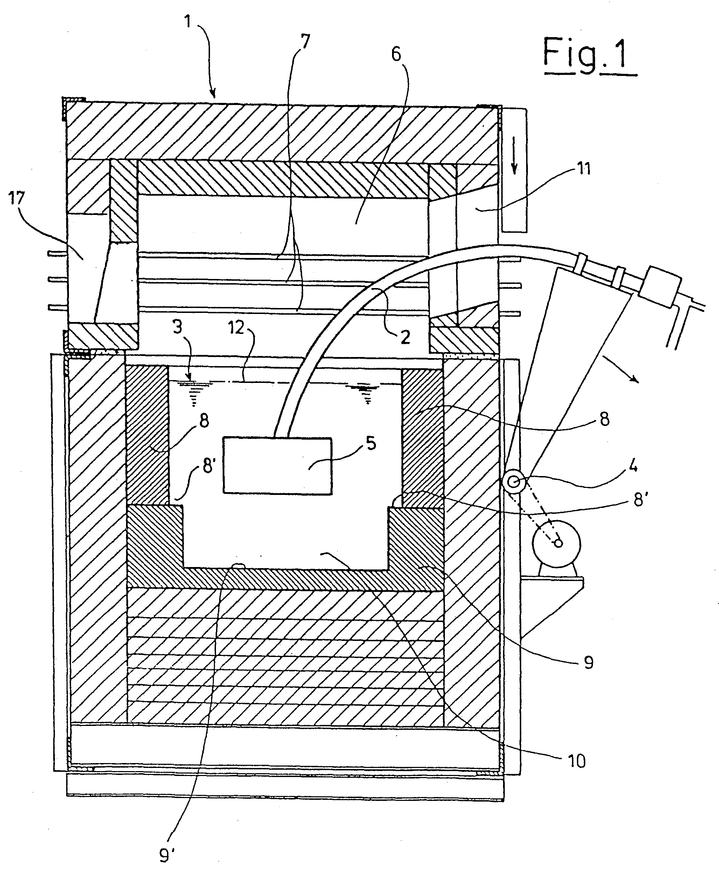

Wie Figur 1 zeigt, besteht der erfindungsgemässe Glasschmelzofen 1 aus einem Bassin 3 und einem darüber angeordneten Oberofen 6. Das Bassin 3 hat etwa die Form einer Wanne mit einem Auskleidungsteil 8 mit geringerer Wandstärke im oberen Bereich und einen Auskleidungsteil 9 mit grösserer Wandstärke im unteren Bereich. Im Inneren des Bassins 3 befindet sich eine Glasschmelze 10, die an ihrer Oberseite den Glasschmelzespiegel 12 bildet. Der Oberofen 6 weist in seinem Inneren Heizelemente 7 bekannter Art auf.

Weiterhin zeigt die Figur 1 eine Elektrode 5 mit Zuleitung 2 im Zustand des Eintauchens in die Glasschmelze 10 im Bassin 3. Ausserhalb des Ofens 1 ist die starre, kreisabschnittförmig gebogene Elektroden-Zuleitungsanordnung 5, 2 um eine Drehachse 4 in etwa vertikaler Ebene verschwenkbar angelenkt. Zur Hindurchführung der Elektroden-Zuleitungs-Anordnung 5, 2 weist der Ofen 1, hier der Oberofen 6, eine verschliessbare Öffnung 11 auf, deren Begrenzung durch die Radien des relativ zur Drehachse innersten und äussersten Punktes der Elektrode 5 gebildet wird.

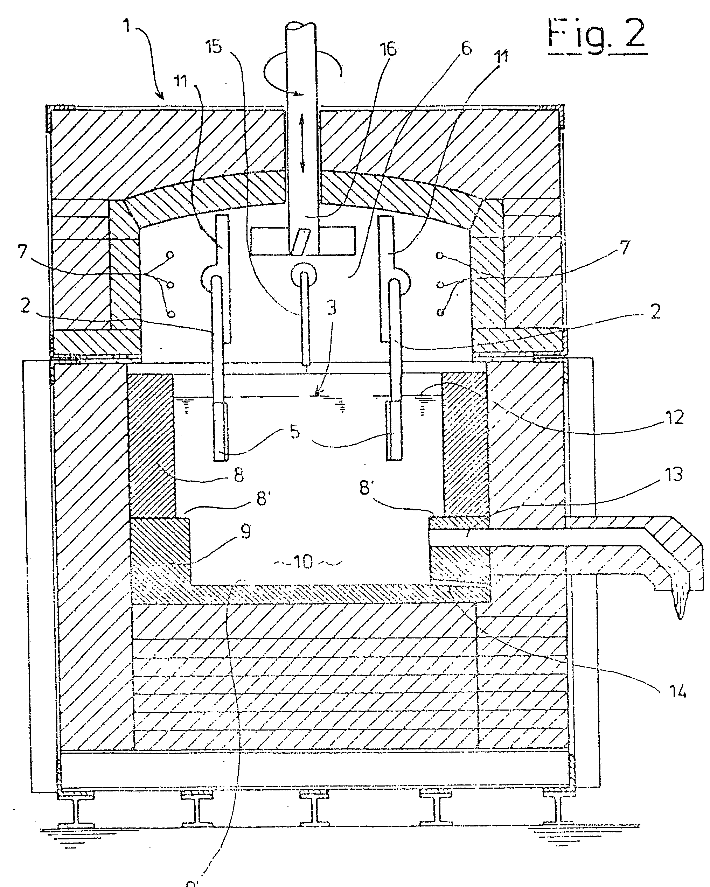

Figur 2 zeigt wiederum den Glasschmelzofen 1 mit Bassin 3 und darüber angeordnetem Oberofen 6. Zusätzlich zu den Heizelementen 7 und den Öffnungen 11 für die Hindurchführung der Elektroden-Zuleitungs-Anordnung 5, 2 weist der Oberofen 6 eine Öffnung 17 für die manuelle Entnahme und die Beschickung mit Gemenge, einen vertikal verfahrbaren Rührer 16 und einen Fühler 15 zur Steuerung einer Nachführung zur Konstanthaltung der Eintauchtiefe der Elektroden 5 in der Glasschmelze 10 im Bassin 3 auf. Neben seiner schon beschriebenen Auskleidung 8, 9 weist das Bassin 3 in der Nähe des Überganges 8' von dem Auskleidungsteil 9 grösserer zum Teil 8 geringer Wandstärke einen seitlichen Auslauf 13 für die Entnahme von Glasschmelze 10 auf. Im Bassin 3 ist in Höhe eines Bodens 9' eine Drainageöffnung 14 angeordnet.

## Patentansprüche

1. Elektrisch betriebener diskontinuierlicher Glasschmelzofen (1) mit wenigstens einem durch eine Anordnung von stromgespeisten Elektroden (5) beheizten, feuerfest·ausgekleideten Bassin (3) und einem darüber angeordneten, elektrische Heizelemente (7) aufweisenden Oberofen (6), dadurch gekennzeichnet, dass die Elektroden (5) Tauchelektroden sind und mit ihren aus dem Ofen (1) herausgeführten metallischen Zuleitungen (2) um eine etwa in Höhe der Hälfte des gefüllten Teils des Bassins (3) ausserhalb des Ofens (1) liegende Drehachse (4) in einer etwa vertikalen Ebene von einer Arbeitsstellung im Ofen (1) in eine Lage ausserhalb des Ofens (1) verschwenkbar angelenkt sind.

2. Glasschmelzofen nach Anspruch 1, dadurch gekennzeichnet, dass der Ofen (1) verschliessbare Öffnungen (11) für die Hindurchführung der Elektroden-Zuleitungs-Anordnung (5, 2) aufweist.

3. Glasschmelzofen nach den Ansprüchen 1 und 2, dadurch gekennzeichnet, dass die Auskleidung des Bassins (3) zweiteilig ist mit einem Auskleidungsteil (9) mit einer grösseren Wandstärke im unteren Bereich und einem Auskleidungsteil (8) mit einer geringeren Wandstärke im oberen Bereich.

4. Glasschmelzofen nach den Ansprüchen 1 bis 3 , dadurch gekennzeichnet, dass das Bassin (3) etwa im Bereich des Überganges vom Auskleidungsteil (9) mit der grösseren zum Teil (8) mit der geringeren Wandstärke einen absperrbaren seitlichen Auslauf (13) aufweist.

5. Glasschmelzofen nach den Ansprüchen 1 bis 4, dadurch gekennzeichnet, dass das Bassin (3) in Höhe seines Bodens (9') oder im Boden (9') selbst eine Drainageöffnung (14) aufweist.

6. Glasschmelzofen nach den Ansprüchen 1 bis 5, dadurch gekennzeichnet, dass die Zuleitungen (2) der Elektroden (5) starr sind und etwa kreisabschnittförmig um einen in der Drehachse (4) liegenden Kreismittelpunkt gebogen sind.

7. Glasschmelzofen nach den Ansprüchen 1 bis 6, dadurch gekennzeichnet, dass der Ofen (1) eine selbsttätige Nachführeinrichtung (15) zur Konstanthaltung der Eintauchtiefe der Elektroden (5) bei wechselndem Stand des Spiegels (12) der Glasschmelze (10) im Bassin (3) aufweist.

8. Glasschmelzofen nach den Ansprüchen 1 bis 7, dadurch gekennzeichnet, dass die Elektrode (5) die Form einer Platte (5') hat.

9. Glasschmelzofen nach den Ansprüchen 1 bis 8, dadurch gekennzeichnet, dass der Ofen (1) wenigstens einen in seinem Inneren vertikal verfahrbaren Rührer (16) aufweist.

## Revendications

1. Four (1) pour la fusion du verre à fonctionnement électrique discontinu, comportant au minimum un creuset (3), revêtu de rétractaire, chauffé par un dispositif d'électrodes (5) alimentées en courant, et une partie supérieure (6) de four présentant des éléments de chauffage électriques, disposée au-dessus, caractérisé par le fait que les électrodes (5) sont des électrodes a immersion, et sont articulées de façon à pouvoir pivoter, avec leurs alimentations métalliques (2) passant hors du four (1) autour un axe de rotation (4) situé approximativement à mi-hauteur de la partie remplie du creuset (3) dans un plan approximativement vertical, à partir d'une position de travail situé dans le four (1) vers une position située a l'extérieur du four.

2. Four pour la fusion du verre selon la revendication 1, caractérisé par le fait que le four (1) comporte des ouvertures (11) susceptibles d'être fermées, destinées au passage de l'ensemble électrodes-alimentation (5, 2).

3. Four pour la fusion du verre selon les revendications 1 et 2, caractérisé par le fait que le revêtement du creuset (3) se compose de deux parties, une partie (9) dont le revêtement a une paroi d'une plus forte épaisseur dans la zone inférieure et une partie (8) dont le revêtement a une paroi d'une plus faible épaisseur dans la zone supérieure.

4. Four pour la fusion du verre selon les revendications 1 à 3, caractérisé par le fait que le creuset (3) présente un orifice d'évacuation (13) latéral susceptible d'être fermé, situé approximativement dans la zone de transition entre la partie (9) de revêtement a une épaisseur de paroi plus forte et la partie (8) à une épaisseur de paroi plus faible.

5. Four pour la fusion du verre selon les revendications 1 à 4, caractérisé par le fait que le creuset (3) présente à la hauteur de son fond (9') ou dans son fond (9') lui-même, un orifice de vidange (14).

6. Four pour la fusion du verre selon les revendications 1 à 5 les alimentations (2) des électrodes (5) sont rigides et ont approximativement la forme courbe d'un segment de cercle dont le centre se situe sur l'axe de rotation (4).

7. Four pour la fusion du verre selon les revendications 1 à 6, caractérisé par le fait que le four (1) présente un dispositif de rattrapage automatique (15) destiné à maintenir constante la profondeur d'immersion des électrodes (5) lorsque le niveau de la surface (12) du verre en fusion (10) varie dans le creuset (3).

8. Four pour la fusion du verre selon les revendications 1 à 7, caractérisé par le fait que l'électrode (5) a la forme d'une plaque (5').

9. Four pour la fusion du verre selon les revendications 1 à 8, caractérisé par le fait que le four (1) présente au moins un agitateur (16) susceptible de se déplacer verticalement dans sa partie intérieure.

## Claims

1. An electrically-operated, discontinuous glass melting furnace (1) having at least one reservoir (3) with a fireproof lining and which is heated by a system of current-fed electrodes (5), and an upper furnace (6) arranged thereover and having electric heating elements (7), characterised in that the electrodes (5) are dipped electrodes and are connected by their metallic feed lines (2) which pass out of the furnace (1) about an axis of rotation (4) which is approximately at half the height of the filled part of the reservoir (3) and located outside the furnace (1) so that they are pivotable in an approximately vertical plane from an operating position in the furnace (1) into a position outside the furnace (1).

2. A glass melting furnace according to Claim 1, characterised in that the furnace (1) has closable openings (11) for the electrode/feed line system (5, 2) to pass through.

3. A glass melting furnace according to Claims 1 and 2, characterised in that the lining of the reservoir (3) is in two parts, with one lining part (9) having a greater wall thickness in the lower region and one lining part (8) having a lesser wall thickness in the upper region.

4. A glass melting furnace according to Claims 1 to 3, characterised in that the reservoir (3) has a lateral outlet (13) which can be blocked off and is located approximately in the region of the transition from the lining part (9) having the greater wall thickness to the part (8) having the lesser wall thickness.

5. A glass melting furnace according to Claims 1 to 4, characterised in that the reservoir (3) has a drainage opening (14) on a level with its base (9') or in the base (9') itself.

6. A glass melting furnace according to Claims 1 to 5, characterised in that the feed lines (2) of the electrodes (5) are rigid and are curved in approximately an arc shape about the centre of a circle located in the axis of rotation (4).

7. A glass melting furnace according to Claims 1 to 6, characterised in that the furnace (1) has an automatic followup device (15) to keep the depth of immersion of the electrodes (5) constant as the state of the level (12) of the molten glass (10) in the reservoir (3) changes.

8. A glass melting furnace according to Claims 1 to 7, characterised in that the electrode (5) is in the form of a plate (5').

9. A glass melting furnace according to Claims 1 to 8, characterised in that the furnace (1) has at least one stirrer (16) which is movable vertically in its interior.

Fig.1

Fig.2